# EUROPÄISCHE PATENTSCHRIFT

(11) **EP 2 946 703 B1**
(45) Veröffentlichungstag und Bekanntmachung des Hinweises auf die Patenterteilung: **12.03.2025**
(21) Anmeldenummer: 15165342.5
(22) Anmeldetag: 28.04.2015
(51) Int. Cl.: A47J 31/44, A47B 77/08

(54) **EINBAUKAFFEEVOLLAUTOMAT MIT TÜRENFRONT**
BUILT-IN FULLY AUTOMATIC COFFEE MACHINE HAVING DOOR FRONT
MACHINE À CAFÉ AUTOMATIQUE INTÉGRÉE ÉQUIPÉE D'UNE PORTE AVANT

(30) Priorität: 23.05.2014 DE 102014209928
(43) Veröffentlichungstag der Anmeldung: 25.11.2015
(73) Patentinhaber: BSH Hausgeräte GmbH, 81739 München (DE)
(72) Erfinder: Leinmüller, Elena, 85521 Ottobrunn (DE); Mahmutovic, Melissa, 46519 Alpen (DE); Schmidt, Tobias, 81371 München (DE); Grützke, Joachim, 85560 Ebersberg (DE)

(56) Entgegenhaltungen:
- EP-A1- 1 512 354
- DE-A1- 102007 040 308
- DE-A1- 102008 042 276
- DE-A1- 102012 200 312
- DE-A1- 3 635 669
- US-A- 2 838 077
- US-A- 3 851 939
- US-A1- 2012 171 332

## Beschreibung

Die Erfindung betrifft einen Einbaukaffeevollautomat für den Einbau in eine Einbaunische eines Küchenmöbels für Haushalts- oder Bürozwecke, mit einer für einen Benutzer zugänglichen Frontfläche, in der ein Ausgabeabschnitt zur Ausgabe eines fertigen Heißgetränks mit einer Ausgabeeinheit und ein Serviceabschnitt zur Vornahme von Ver- und/oder Entsorgungstätigkeiten angeordnet sind. Die Frontfläche des Einbaukaffeevollautomaten liegt auf seiner Frontseite, nämlich der einzigen, einem Bediener zugewandten und zur Bedienung zugänglichen Seite des bestimmungsgemäß eingebauten Kaffeevollautomaten. Die übrigen Seiten sind meist von Möbelteilen umgeben. Die Frontfläche ist in zwei Abschnitte unterteilt. Der erste Abschnitt ist ein Ausgabeabschnitt zur Ausgabe eines fertigen Heißgetränks. Der zweite Abschnitt ist ein Serviceabschnitt zur Vornahme von Ver- und/oder Entsorgungstätigkeiten. Unter Versorgungstätigkeiten ist zum Beispiel das Befüllen mindestens eines Versorgungsbehälters mit frischen Kaffeebohnen, das Befüllen eines anderen Versorgungsbehälters mit Kaffeepulver, das Befüllen eines Wasserbehälters, der aus Redundanzgründen trotz eines direkten Festwasserversorgungsanschlusses der Heißgetränkezubereitungseinrichtung vorhanden sein kann, oder das Ersetzen eines Milchgefäßes zu verstehen. Unter der Entsorgung sind zum Beispiel das Entfernen eines leeren Milchgefäßes oder das Leeren des Kaffeesatzbehälters zu verstehen.

Die DE 10 2012 200 312 A1 offenbart einen Kaffeevollautomat für Haushaltszwecke für den Einbau in eine Einbaunische eines Küchenmöbels. Der Kaffeevollautomat umfasst einen Frontabschnitt mit einem ersten Abschnitt, der Bedien- und Abgabeelemente enthält. Ferner umfasst der Frontabschnitt des Kaffeevollautomaten einen zweiten Abschnitt, von dem aus zumindest ein Servicefach für Ver- und/oder Entsorgungsbehälter zugänglich ist, wobei der erste Abschnitt feststehend und der zweite Abschnitt schwenkbar ausgebildet sind. Zudem ist aus US 2 838 077 A ein Heißgetränkebereiter und aus EP 1 512 354 A1 ein Heißgetränkebereiter mit verstellbarem Getränkeauslauf bekannt. Die DE 10 2007 040 308 A1 offenbart einen Getränkebereiter. Die US 3 851 939 A offenbart einen Kühlschrank mit einem integrierten Getränkebereiter und einer Tür die in einer Schließstellung den Ausgabeabschnitt des Getränkebereiters überdeckt.

Die Aufgabe der Erfindung besteht darin, einen Einbaukaffeevollautomat für Haushalts- oder Bürozwecke anzugeben, die sich für den Einbau in Küchenmöbel oder dergleichen eignet und bei der sich die Frontseite hinsichtlich ihres Designs an bestehende Küchengestaltungen anpassen lässt.

Diese Aufgabe wird bei dem eingangs genannten Einbaukaffeevollautomat erfindungsgemäß durch eine erste Tür an der Frontfläche gelöst, die in einer Schließstellung den Ausgabeabschnitt mit der höhenverstellbaren Ausgabeeinheit überdeckt und die in einer Offenstellung den Ausgabeabschnitt zugänglich macht. Der Ausgabebereich ist an der Frontfläche durch eine erste Tür in ihrer Schließstellung abgedeckt. In der Offenstellung der ersten Tür macht diese den Ausgabebereich für den Benutzer zugänglich.

Durch die erfindungsgemäße Ausgestaltung des Einbaukaffeevollautomaten mit einer Tür, die in ihrer Schließstellung den Ausgabeabschnitt überdeckt, lässt sich der Einbaukaffeevollautomat optimal in das Design der Frontfläche eines der Einbaukaffeevollautomat aufnehmenden Küchenmöbels einpassen. Zugleich kann der Ausgabeabschnitt des Einbaukaffeevollautomaten auf einfache und komfortable Art und Weise durch Öffnen der Tür für einen Benutzer zugänglich gemacht werden. Durch die einheitliche Frontfläche wird den gestalterischen Erfordernissen an eine moderne Küche entsprochen, in der sich die einzelnen Geräte untereinander oder die Geräte von den übrigen Küchenmöbeln designmäßig kaum oder gar nicht unterscheiden sollen. Rein praktisch ergibt sich durch die damit verbundene Abdeckung des Ausgabebereichs in der Schließstellung der ersten Tür auch ein positiv zu bewertender Verschmutzungsschutz.

Die erste Tür kann grundsätzlich die Zubereitungseinrichtung vollständig oder nur ihren Ausgabebereich abdecken. Der Einbaukaffeevollautomat kann nach einer vorteilhaften Weiterbildung der Erfindung eine zweite Tür umfassen, die in ihrer Schließstellung den Serviceabschnitt überdecken und in ihrer Offenstellung den Serviceabschnitt zugänglich machen kann. Der Serviceabschnitt und der Ausgabeabschnitt können dann unabhängig voneinander zugänglich gemacht werden. Zusätzlich können die erste und die zweite Tür so ausgestattet sein, dass die dem Ausgabeabschnitt zugeordnete erste

Tür von jedem Nutzer des Einbaukaffeevollautomaten bedient werden kann, während die Bedienung der dem Serviceabschnitt zugeordneten zweiten Tür lediglich ausgewählten Personen vorbehalten ist, zum Beispiel entsprechend qualifiziertem Servicepersonal. Dazu kann die zweite Tür beispielsweise über ein Schloss verfügen, das nur *(Weiter auf Seite 3, erster Absatz)* von für die Wartung des Einbaukaffeevollautomaten zuständigem Servicepersonal geöffnet werden kann. Die erste Tür und die zweite Tür können sich in ihrer jeweiligen Schließstellung koplanar in einer gemeinsamen Schließebene über die Frontseite des Einbaukaffeevollautomaten erstrecken. Dadurch wird ein optisch besonders ansprechender Gesamteindruck des Einbaukaffeevollautomaten und eines der Einbaukaffeevollautomat aufnehmenden Küchenmöbels geschaffen.

Nach einer vorteilhaften Weiterbildung der Erfindung kann die erste Tür als Schiebetür ausgebildet sein, die sich vor die zweite Tür schieben lässt. Die erste Tür kann sich in ihrer Offenstellung im Wesentlichen derart parallel zu der sich in ihrer Schließstellung befindenden zweiten Tür erstrecken, dass die zweite Tür zwischen dem Serviceabschnitt und der ersten Tür angeordnet ist. Die erste Tür fährt dann beim Verlassen der Schließstellung aus der gemeinsamen Schließebene heraus und geringfügig auf den Benutzer zu. Anschließend kann die erste Tür seitwärts vor die zweite Tür verschoben werden, bis sie in ihrer Offenstellung die zweite Tür überdeckt. Wenn sich die erste Tür in ihrer Offenstellung befindet, kann die zweite Tür nicht geöffnet werden. Sobald der Ausgabeabschnitt für die Zubereitung eines Heißgetränks geöffnet ist, ist also der Serviceabschnitt zwingend nicht mehr zugänglich. Dadurch lässt sich eine unbedachte Fehlbedienung oder eine gewollte Manipulation des Einbaukaffeevollautomaten während ihres Zubereitungsbetriebs wirksam verhindern. Bei einer zurückhaltenden Gestaltung der zweiten Tür, beispielsweise ohne erkennbaren Türgriff, kann der Serviceabschnitt für den Benutzer unerkennbar bleiben, was einer Fehlbedienung vorbeugt und ein Verschließen der zweiten Tür per Schoss erübrigen kann.

Die Betätigung der als Schiebetür ausgebildeten ersten Tür kann ohne Beeinträchtigung des vor der Frontseite des Einbaukaffeevollautomaten liegenden Raums erfolgen, in dem sich ein Benutzer des Einbaukaffeevollautomaten aufhält. Denn die geöffnete erste Tür steht nicht weitgehend senkrecht in den Raum hinein, insoweit vergleichbar einer in das Küchenmöbel versenkbare Tür. Die als Schiebtür ausgebildete erste Tür kann aber einen Einbauraumbedarf in dem Küchenmöbel erübrigen, den die versenkbare Tür erfordert. Wenn sich die erste Tür in ihrer Offenstellung befindet, stört sie nicht nur nicht, so dass der Ausgabebereich besonders bequem zugänglich ist, sondern versperrt zugleich den Serviceabschnitt, so dass die oben beschriebenen Fehlbedienungen ausgeschossen werden.

Im Gegensatz dazu ist die zweite Tür des Einbaukaffeevollautomaten vorzugsweise als Anschlag- oder Schwenktür ausgeführt. Die zweite Tür kann dann auf herkömmliche Weise geöffnet werden, um Zugang zu den Ver- und Entsorgungsbehältern im Serviceabschnitt des Einbaukaffeevollautomaten zu erhalten. Falls erforderlich kann die zweite Tür mit einem mechanischen oder elektronischen Schloss versehen sein. Während die Überdeckung des Servicebereichs durch die erste Tür in ihrer Offenstellung einen Zugang zum Servicebereich bereits erschwert, wird der Zugang durch ein Schloss unabhängig vom Betriebszustand der Zubereitungseinrichtung auf berechtigte Personen limitiert.

Nach einer weiteren vorteilhaften Ausgestaltung der Erfindung kann der Einbaukaffeevollautomat eine Führungsschiene aufweisen, die sich parallel zu der zweiten Tür in deren Schließstellung erstreckt. Die Führungsschiene dient dazu, die Bewegung der ersten Tür zwischen ihrer Schließstellung und ihrer Offenstellung zu führen. Insbesondere können ein entlang der Führungsschiene bewegbares Verschiebeelement und ein die erste Tür mit dem Verschiebeelement verbindendes Verbindungselement vorgesehen sein, die eine geführte Bewegung der ersten Tür entlang der Führungsschiene ermöglichen. Durch das Zusammenwirken des Verschiebeelements mit dem Verbindungselement und der Führungsschiene kann die erste Tür beim Öffnen seitwärts vor die zweite Tür verschoben werden, bis die erste Tür in ihrer Offenstellung die zweite Tür in ihrer Schließstellung überdeckt. Ein derartiger Führungsmechanismus ist einfach zu realisieren und wartungsfreundlich.

Nach einer weiteren vorteilhaften Ausgestaltung der Erfindung kann der Einbaukaffeevollautomat mit einer Antriebseinheit ausgestattet sein, die dazu eingerichtet ist, bei der Betätigung einer Aktivierungseinrichtung die erste Tür aus ihrer Schließstellung in ihre Offenstellung zu bewegen. Die Antriebseinheit kann sowohl rein mechanisch, beispielweise über einen vorspannbaren Federantrieb ausgeführt sein, als auch elektromechanisch. Sie ermöglicht eine besonders komfortable Bedienung des Einbaukaffeevollautomaten, da ein Nutzer lediglich die Aktivierungseinrichtung betätigen muss, um Zugang zu dem Ausgabeabschnitt des Einbaukaffeevollautomats zu erhalten. Als Aktivierungseinrichtung kann ein herkömmlicher manuell zu bedienender Einschaltknopf dienen. Alternativ dazu kann ein Annäherungssensor die Antriebseinheit bei Unterschreiten eines definierten Abstands eines Benutzers an die Zubereitungseinrichtung aktivieren. Vor allem mit dem Sensor vermittelt ein automatisches Öffnen der Tür einem Benutzer ein "magisches" Überraschungsmoment. Die Aktivierungseinrichtung kann ferner derart mit einer Steuerung des Einbaukaffeevollautomaten gekoppelt sein, dass ihre Betätigung auch einen "Hochfahrvorgang" des Einbaukaffeevollautomaten, d.h. beispielsweise einen Vorreinigungsvorgang oder ein Aufheizen der Brühgruppe in einen betriebsbereiten Zustand initiiert. Der Einbaukaffeevollautomat ist dann besonders komfortabel bedienbar.

Nach einer weiteren vorteilhaften Ausgestaltung der Erfindung kann der Einbaukaffeevollautomat auf der ersten Tür ein Bedienelement oder alle bekannten Bedienelemente zur Bedienung des Einbaukaffeevollautomaten enthalten. Das Bedienelement kann beispielsweise den Einschaltknopf zur Betätigung der ersten Tür und/oder zur Inbetriebnahme des Einbaukaffeevollautomaten umfassen. Des Weiteren kann das Bedienelement Auswahlschalter zur Auswahl verschiedener Heißgetränke, wie zum Beispiel Cappuccino, Latte Macchiato oder auch gewöhnlichen Bohnenkaffee, zur Auswahl der Geschmacksintensität, d.h. der Stärke des Getränks und/oder zur Auswahl verschiedener Kaffeebohnensorten umfassen. Ferner kann das Bedienelement Anzeigefelder zur Anzeige des Betriebsstatus der Komponenten des Serviceabschnitts enthalten. Auf den Anzeigefeldern kann beispielsweise der Füllstand eines in dem Serviceabschnitt vorgesehenen Wasser- oder Milchbehälters, der Füllstand eines in dem Serviceabschnitt vorgesehenen Kaffeetresterbehälters oder die Notwendigkeit eines Reinigungs- oder Spülvorgangs angezeigt werden. Die Anordnung des Bedienelements bzw. der Bedienelemente auf der ersten Tür vermittelt einen besonders ansprechenden Designeindruck. Denn zum einen kann die gesamte Außenfläche der ersten Tür für die Anordnung großzügig gestalteter Bedienelemente genutzt werden. Damit können zum anderen der Ausgabe- und der Serviceabschnitt um Bedienelemente räumlich entlastet und optisch übersichtlicher gestaltet werden.

Nach einer weiteren vorteilhaften Ausgestaltung der Erfindung kann das Bedienelement der ersten Tür einen berührungssensitiven Flachbildschirm, d.h. einen Touchscreen umfassen. Ein Touchscreen ist nicht nur einfach, intuitiv und komfortabel bedienbar, sondern wirkt auch visuell und haptisch besonders ansprechend auf einen Nutzer des Einbaukaffeevollautomaten. Ferner kann ein Touchscreen situationsabhängig mit unterschiedlichen Bedien- und Informationsfeldern belegt werden. So kann der Bildschirm im Ruhezustand einen beliebigen Inhalt oder eine beliebige Gestaltung anzeigen oder selbst ebenfalls inaktiv, also abgeschaltet sein. Bei geöffneter erster Tür dagegen kann er ausschließlich Bedien- und Informationsfelder anzeigen, die für die Zubereitung von Heißgetränken erforderlich oder hilfreich sind. Bei verschlossenem Ausgabeabschnitt, aber geöffnetem Serviceabschnitt dagegen kann er Bedien- und Informationsfelder für die Vornahme von Ver- und/oder Entsorgungstätigkeiten anbieten. Ein weiterer Vorteil des Touchscreen kann darin liegen, dass sich der Touchscreen bei Nichtbenutzung gestalterisch nahtlos in die bestehenden Designs anderer Küchengeräte mit schwarzer Front einpasst.

In einer weiteren vorteilhaften Ausgestaltung kann der Einbaukaffeevollautomat in ihrem Serviceabschnitt eine Mehrzahl von modular gestalteten und einzeln aus dem Serviceabschnitt entnehmbaren Ver- und/oder Entsorgungsbehältern umfassen. Sie können für Kaffeetrester, Frisch- und Restwasser, Milch, Kaffeebohnen, Kaffeepulver und dergleichen dienen. Dadurch wird eine einfache und komfortable Wartung des Einbaukaffeevollautomaten ermöglicht. Insbesondere kann der Serviceabschnitt mit mindestens einem Behälter für Zubehör und einem Aufnahmebereich für ein Milchvorratsgefäß ausgestattet sein. Durch Entnahme oder Hinzufügen mindestens eines Behälters, der insbesondere als Behälter für Zubehör, aber auch als beliebiger anderer Ver- und/oder Entsorgungsbehälter ausgestaltet sein kann, kann vorzugsweise der Aufnahmebereich für ein Milchvorratsgefäß verändert werden. Der Behälter ist vorzugweise benachbart zu dem Aufnahmebereich für das Milchvorratsgefäß angeordnet, also links, rechts oder ober- oder unterhalb davon, so dass durch die Entnahme bzw. das Hinzufügen des Behälters die Größe und die Form des Aufnahmebereichs für das Milchvorratsgefäß variiert werden kann. Ein Behälter für Zubehör, wie zum Beispiel eine Kurzanleitung oder ein Kaffeepulvermesslöffel, kann dafür besonders gut geeignet sein, da er ohne Funktionseinbußen der Zubereitungseinrichtung am ehesten verzichtbar sein kann. Auch der im Falle eines Festwasseranschlusses redundante Wasserbehälter oder auch der dritte Kaffeebohnenversorgungsbehälter können im Falle eines erhöhten Raumbedarfs entfernt werden. Dadurch können in dem Aufnahmebereich für das Milchvorratsgefäß verschieden große und verschieden geformte Milchverpackungen, wie zum Beispiel schlanke hohe Milchflaschen oder querformatige Milchverpackungen verschiedener Größe verwendet werden, die jeweils optimal in platzsparender Weise in den in des Einbaukaffeevollautomaten zur Verfügung stehenden Raum eingepasst werden können. Dadurch lässt sich der Serviceabschnitt so klein wie möglich gestalten, ohne dass auf eine gewisse Flexibilität verzichtet werden müsste.

Das Prinzip der Erfindung wird im Folgenden anhand einer Zeichnung beispielshalber noch näher erläutert. In der Zeichnung zeigen:
- Figur 1:: eine Frontansicht eines geschlossenen Einbaukaffeevollautomaten,

- Figur 2:: eine Frontansicht des Einbaukaffeevollautomaten mit einer dem Ausgabeabschnitt zugeordneten offenen Tür,
- Figur 3:: eine Frontansicht des Einbaukaffeevollautomaten mit einer dem Serviceabschnitt zugeordneten offenen Tür,
- Figur 4:: eine Frontansicht des Einbaukaffeevollautomaten gemäß Figur 3, mit einer Milchflasche als Milchvorratsgefäß.

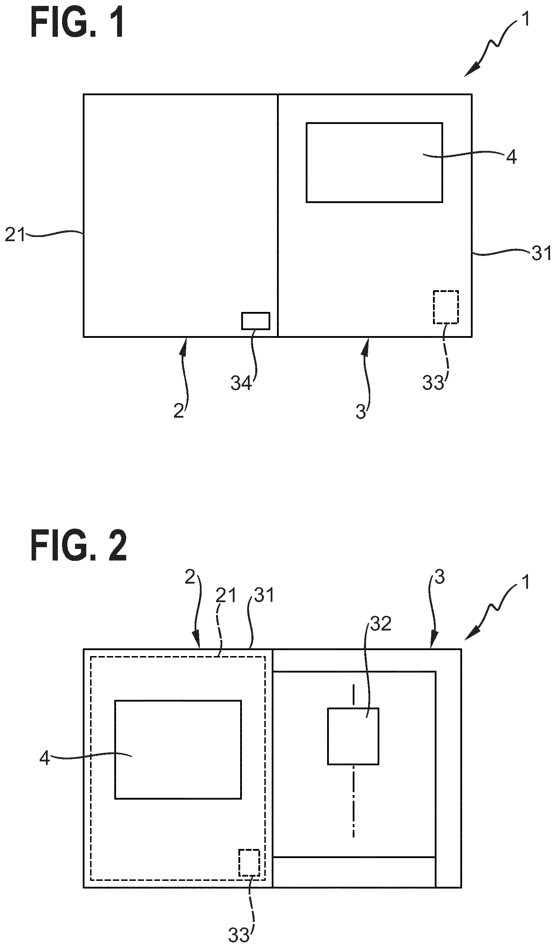

Die Figuren 1 bis 4 zeigen jeweils denselben Einbaukaffeevollautomaten als Heißgetränkezubereitungseinrichtung 1 von einer Frontseite aus, dessen Ansichts- oder Frontfläche sich in einen Serviceabschnitt 2 und einen Ausgabeabschnitt 3 unterteilt. Der Ausgabeabschnitt 3 ist auf der rechten Seite angeordnet, während der Serviceabschnitt 2 auf der linken Seite angeordnet ist. Es ist jedoch auch möglich, den Ausgabeabschnitt 3 auf der linken Seite und den Serviceabschnitt 2 auf der rechten Seite anzuordnen.

Die Figur 1 zeigt ferner die Aufteilung der Frontfläche des Einbaukaffeevollautomaten 1 in zwei symmetrische, das heißt gleich große Abschnitte 2, 3. Der Serviceabschnitt 2 und der Ausgabeabschnitt 3 können jedoch auch asymmetrisch, das heißt verschieden groß ausgebildet sein. Die Frontfläche des Einbaukaffeevollautomaten 1 wird durch eine erste Tür 31 und eine zweite Tür 21 gebildet. Die erste Tür 31 verschließt den Ausgabeabschnitt 3, die zweite Tür 21 verschießt den Serviceabschnitt 2. In der ersten Tür 31 ist ein Bedienelement 4 integriert, das als Touchscreen ausgebildet ist. Bei einer schwarzen Lack- oder Glasoberfläche der Türen 21, 31 ist daher das Bedienelement 4 zunächst nicht zu erkennen, da sein Bildschirm von den übrigen Türflächen optisch nicht zu unterscheiden ist. Zum Öffnen des Ausgabeabschnitts 3 ist eine Antriebseinheit 33 an der ersten Tür 31 verdeckt und daher von außen nicht erkennbar angebracht. Die zweite Tür 21 weist ein Schloss 34 auf, das unbefugten Zugriff auf die Serviceeinheit 2 verhindert. Im Übrigen weisen die Türen 21, 31 keine weiteren von außen erkennbaren Elemente wie Griffleisten, Möbelknöpfe oder dergleichen auf. Wenn sich sowohl die erste als auch die zweite Tür 31, 21 in ihren Schließstellungen wie in Figur 1 befinden, erstrecken sie sich koplanar über die Frontfläche des Einbaukaffeevollautomaten 1. Sie erzeugen daher eine designmäßig einheitliche koplanare Frontfläche des Einbaukaffeevollautomaten 1, die sich in bestehende Küchen- und Büroeinrichtungen nahtlos einfügen lässt. Weil sowohl der Serviceabschnitt 2 als auch der Ausgabeabschnitt 3 durch die Türen 21, 31 vollständig verdeckt sind und jene zunächst jedenfalls keinen Hinweis auf sie bieten, lässt sich der Einbaukaffeevollautomat 1 zudem optisch nicht wahrnehmen.

In ihrer in Figur 2 gezeigten Offenstellung macht die erste Tür 31 den Ausgabeabschnitt 2 zugänglich. Sie ist als Schiebetür ausgebildet und lässt sich vor die und parallel zur Tür 21 verfahren. In dem Ausgabeabschnitt 3 und hinter der Tür 31 befindet sich eine höhenverstellbare Ausgabeeinheit 32 zur Ausgabe eines fertigen Heißgetränks, unter der ein entsprechendes Gefäß, zum Beispiel eine Tasse oder ein Glas zum Auffangen des Heißgetränkes positioniert werden kann. Der geöffnete Ausgabeabschnitt 3 selbst ist somit auf das für einen Benutzer des Einbaukaffeevollautomaten 1 Wesentliche reduziert, so dass er sich nur auf sein Heißgetränk konzentrieren kann.

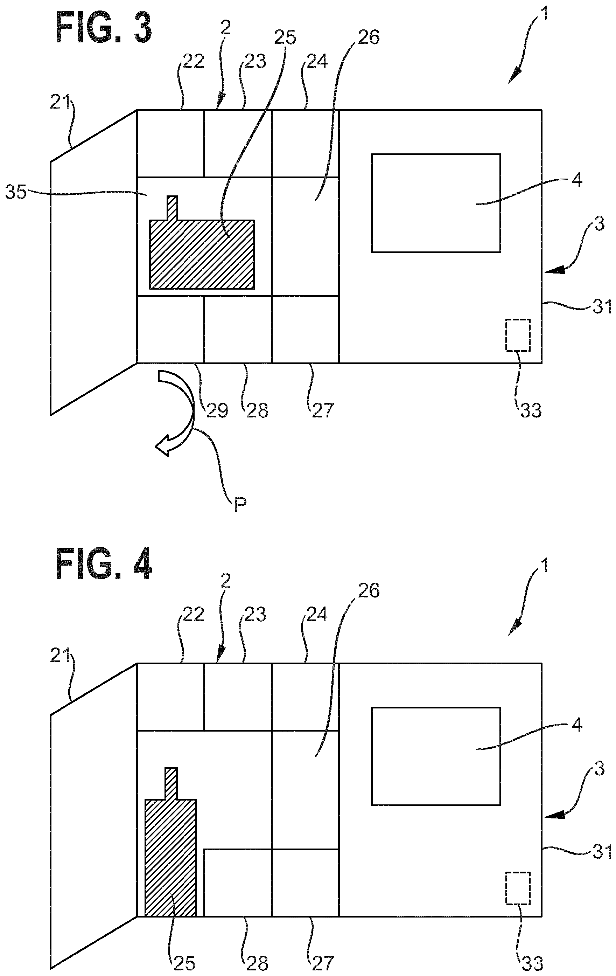

In ihrer in den Figuren 3 und 4 dargestellten Offenstellung macht die zweite Tür 21 den Serviceabschnitt 2 zugänglich und versperrt zugleich die Tür 31 (nicht separat dargestellt) und damit den Zugang zum Ausgabebereich 3. Der Serviceabschnitt 2 dient zur Vornahme von Ver- und Entsorgungstätigkeiten und umfasst eine Mehrzahl von schubladenförmigen Ver- und Entsorgungsbehältern 22 bis 25 und 27 bis 29, deren Funktion nachfolgend näher dargestellt wird. Bei den Versorgungsbehältern 22, 23 handelt es sich um Behälter für Kaffeebohnen, so dass es möglich ist, zwei unterschiedliche Kaffeebohnensorten anzubieten. Der Versorgungsbehälter 24 ist ein Behälter für Kaffeepulver, so dass auch frisch aufgebrühter Filterkaffee angeboten werden kann, ohne dass ein Mahlvorgang erforderlich würde. Unter dem Versorgungsbehälter 24, der zur Aufnahmen von Kaffeepulver dient, ist eine Brüheinheit 26 untergebracht. Sie ist damit abweichend von vergleichbaren bekannten Zubereitungseinrichtungen vom Serviceabschnitt 2 aus zugänglich. Der Entsorgungsbehälter 27 ist ein Behälter zur Aufnahme von Kaffeesatz. Bei dem Versorgungsbehälter 28 handelt es sich um einen Wassertank, der trotz eines Festwasseranschlusses, der in den Figuren nicht gezeigt ist, einen Puffer für Wasser darstellt. Der Versorgungsbehälter 29 ist als Zubehörschublade ausgebildet, die zum Aufbewahren von Kleinteilen, wie zum Beispiel Löffeln, die zum Befüllen der Versorgungsbehälter 22 bis 24, den Kaffeebohnenbehältern und dem Kaffeepulverbehälter, hilfreich sein können, oder zum Aufbewahren einer Bedienungskurzanleitung des Einbaukaffeevollautomaten 1 genutzt werden kann. Bei dem Versorgungsbehälter 25 handelt es sich um einen Milchbehälter, der in einem entsprechenden Aufnahmebereich 35 für ein Milchvorratsgefäß aufgenommen ist. Wie nachfolgend noch näher erläutert wird, kann Milch in ihrer Originalverpackung in den Einbaukaffeevollautomat 1 gestellt und mit ihr über einen Schlauch verbunden werden. Durch die Trennung von Serviceabschnitt 2 und Ausgabeabschnitt 3 und insbesondere durch die Reduzierung des Ausgabeabschnitts 3 auf das für den Benutzer Wesentliche, wird der designerische Ansatz unterstützt, eine moderne Küche auf das Wesentliche zu reduzieren.

Auf dem Touchscreen als Bedienelement 4 lässt sich ein betätigbarer Einschaltknopf zur Inbetriebnahme des Einbaukaffeevollautomaten 1 darstellen sowie Auswahlschalter zur Auswahl verschiedener Heißgetränke, wie zum Beispiel Cappuccino, Latte Macchiato oder Bohnenkaffee, zur Auswahl der Geschmacksintensität, d.h. der Stärke des Getränks und/oder zur Auswahl verschiedener Kaffeebohnensorten. Auf dem Touchscreen bietet sich die Möglichkeit, kontextabhängig bzw. in Abhängigkeit davon, welche der Türen 21, 31 geöffnet ist, die verschiedenen Bedienelemente zu platzieren. Da in Figur 3 die Tür 21 geöffnet und damit der Serviceabschnitt zugänglich ist, gibt das Bedienelement 4 verschiedene Anzeigefelder zur Anzeige des Betriebsstatus des Einbaukaffeevollautomaten 1 wieder, auf denen beispielsweise der Füllstand eines in dem Serviceabschnitt 2 vorgesehenen Wasser- oder Milchbehälters, der Füllstand eines in dem Serviceabschnitt 2 vorgesehenen Kaffeesatzbehälters oder die Notwendigkeit eines Reinigungs- oder Spülvorgangs angezeigt werden. Die Anordnung des Bedienelements 4 auf der ersten Tür 31 bietet die Möglichkeit, das Bedienelement 4 sehr großzügig zu gestalten, da auf der ersten Tür 31 sehr viel Platz zur Verfügung steht. Dadurch wird ein optimaler Designeindruck erzeugt und eine komfortable Bedienung des Einbaukaffeevollautomaten 1 ermöglicht.

Das Bedienelement 4 ist als Touchscreen ausgebildet und nicht sichtbar, wenn der Einbaukaffeevollautomat 1 nicht in Benutzung ist. Dadurch passt sich das Design des Einbaukaffeevollautomaten 1 optimal in die umgebende Küchen- oder Büroeinrichtung ein. Ferner ist das Bedienelement 4 mit einem in den Figuren nicht gezeigten Bewegungssensor gekoppelt, der Bewegungen in der Umgebung des Einbaukaffeevollautomaten 1 erfasst. Wenn mittels des Bewegungssensors erfasst wird, dass sich ein Nutzer des Einbaukaffeevollautomaten 1 nähert, leuchtet das Bedienelement 4 auf der ersten Tür 3 auf und ermöglicht die Eingabe der gewünschten Funktion. Es kann also zum Beispiel ausgewählt werden, ob ein Kaffee mit Zucker und Milch oder ein Latte Macchiato ausgegeben werden soll.

Die dem Serviceabschnitt 3 zugeordnete erste Tür 31 ist als Schiebetür ausgeführt. Sie ist zwischen ihrer in den Figuren 1 gezeigten Schließstellung und ihrer in Figur 2 veranschaulichten Offenstellung bewegbar. Geöffnet erstreckt sie sich parallel zu der zweiten Tür 21 in deren Schließstellung, In ihrer Offenstellung ist die erste Tür 31 parallel zu der sich in ihrer Schließstellung befindenden zweiten Tür 21, deren Position in Figur 2 gestrichelt dargestellt ist, und vor dem Serviceabschnitt 2 positioniert, wobei die zweite Tür 21 zwischen dem Serviceabschnitt 2 und der sich in ihrer Offenstellung angeordneten ersten Tür 31 angeordnet ist. Hieraus ergibt sich, dass die erste Tür 31 in ihrer Offenstellung bereits auch ohne das Schloss 34 den Zugang zum Servicebereich 2 verwehrt. Dies ist insbesondere ein sicherheitsrelevanter Aspekt, da durch die Offenstellung der ersten Tür 31 bereits der Zugang zum Servicebereich 2 dem Nutzer versperrt wird. Hierdurch ist zum Beispiel sichergestellt, dass der Nutzer nicht mit der Brüheinheit 26, insbesondere wenn diese in Betrieb ist, in Kontakt kommen kann. Die erste Tür 31 ist mit einer Antriebseinheit 33 gekoppelt, die die erste Tür 31 auf die Betätigung eines auf dem Bedienelement 4 dargestellten Einschaltknopfes hin aus ihrer Schließstellung in ihre Offenstellung bewegt, so dass ein Nutzer des Einbaukaffeevollautomaten 1 lediglich den Einschaltknopf betätigen muss, um Zugang zu dem Ausgabeabschnitt 2 der Heißgetränkezubereitungseinrichtung 1 zu erhalten. Ferner ist der Einschaltknopf mit einer in den Figuren nicht gezeigten Steuerung des Einbaukaffeevollautomaten 1 gekoppelt, die bei einer Betätigung des Einschaltknopfes einen "Hochfahrvorgang" des Einbaukaffeevollautomaten 1 initiiert, welcher jene in einen betriebsbereiten Zustand versetzt.

Die dem Serviceabschnitt 2 zugeordnete zweite Tür 21 ist als Anschlag- oder Schwenktür ausgebildet, die in Richtung des Pfeils P in Figur 3 aus ihrer Schließstellung in ihre Offenstellung verschwenkt werden kann. Die erste Tür 31 kann in der Offenstellung der zweiten Tür 21 auf dem Bedienelement 4 durch die Ausführung als Touchscreen die nun relevanten Informationen anzeigen. Es kann angezeigt werden, dass zum Beispiel ein Kaffeebohnenbehälter 22, 23 aufgefüllt werden muss oder der Kaffeesatzbehälter 27 geleert werden muss. Auch die Information über eine zu reinigende Brüheinheit 26 kann hier gegebenenfalls zur Anzeige gebracht werden. Aufgrund des Platzangebotes auf der ersten Tür 31 ist es auch möglich, Informationen über das Vorgehen beim Reinigen der Brüheinheit anzuzeigen. Die zweite Tür 21 ist mit einem Schloss 34 versehen. Dadurch kann der Serviceabschnitt 2 vor unbefugtem Zugriff geschützt werden.

Die in dem Serviceabschnitt 2 des Einbaukaffeevollautomaten 1 vorgesehenen Ver- und/oder Entsorgungsbehälter 22 bis 25 und 27 bis 29 sind jeweils einzeln aus dem Serviceabschnitt 2 des Einbaukaffeevollautomaten 1 entnehmbar. Wie aus einem Vergleich der Figuren 3 und 4 deutlich wird, kann durch die Entnahme oder das Hinzufügen des Versorgungsbehälters 29 die Form und die Größe des Aufnahmebereichs 35 für ein Milchvorratsgefäß 25 verändert werden. Insbesondere kann durch das Entfernen des Versorgungsbehälters 29 der Aufnahmebereich 35 für ein Milchvorratsgefäß derart vergrößert werden, dass ein hoher Milchbehälter 25, wie zum Beispiel eine Flasche, in den Aufnahmebereich 35 eingesetzt werden kann.

Da es sich bei den vorhergehenden, detailliert beschriebenen vier Figuren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Figuren in anderer Form als in der hier beschriebenen folgen. Ebenso kann der Serviceabschnitt 2 in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Einbaukaffeevollautomat

- 2: Serviceabschnitt
- 3: Ausgabeabschnitt
- 4: Bedienelement
- 21: zweite Tür
- 22: Kaffeebohnenbehälter
- 23: Kaffeebohnenbehälter
- 24: Kaffeepulverbehälter
- 25: Milchbehälter
- 26: Brüheinheit
- 27: Kaffeesatzbehälter
- 28: Wassertank
- 29: Zubehörschublade
- 31: erste Tür
- 32: Ausgabeeinheit
- 33: Antriebseinheit
- 34: Schloss
- 35: Aufnahmebereich für ein Milchvorratsgefäß
- P: Pfeil, der die Öffnungsrichtung der zweiten Tür angibt

## Patentansprüche

1. Einbaukaffeevollautomat (1) für Haushalts- oder Bürozwecke mit einer für einen Benutzer zugänglichen Frontfläche, in der ein Ausgabeabschnitt (3) zur Ausgabe eines fertigen Heißgetränks mit einer Ausgabeeinheit (32) und ein Serviceabschnitt (2) zur Vornahme von Ver- und/oder Entsorgungstätigkeiten angeordnet sind, **dadurch gekennzeichnet, dass** die Ausgabeeinheit (32) höhenverstellbar ist, und dass eine erste Tür (31) an der Frontfläche in einer Schließstellung den Ausgabeabschnitt (3) überdeckt und in einer Offenstellung den Ausgabeabschnitt (3) zur Ausgabe eines fertigen Heißgetränks zugänglich macht.

2. Einbaukaffeevollautomat gemäß Anspruch 1, **gekennzeichnet durch** eine zweite Tür (21), die in einer Schließstellung den Serviceabschnitt (2) überdeckt und die in einer Offenstellung den Serviceabschnitt (2) zugänglich macht, wobei sich die erste Tür (31) in ihrer Schließstellung und die zweite Tür (21) in ihrer Schließstellung koplanar über die Frontseite des Einbaukaffeevollautomaten (1) erstrecken.

3. Einbaukaffeevollautomat gemäß Anspruch 2, **gekennzeichnet durch** eine Schiebetür als erste Tür (31), die sich in ihrer Offenstellung im Wesentlichen derart parallel zu der sich in ihrer Schließstellung befindenden zweiten Tür (21) erstreckt, dass die zweite Tür (21) zwischen dem Serviceabschnitt (2) und der ersten Tür (31) angeordnet ist.

4. Einbaukaffeevollautomat gemäß Anspruch 2 oder 3, **gekennzeichnet durch** eine Anschlag- oder Schwenktür als zweite Tür (21).

5. Einbaukaffeevollautomat gemäß einem der Ansprüche 2 bis 4, **gekennzeichnet durch** eine Führungsschiene, die sich parallel zu der zweiten Tür (21) in deren Schließstellung erstreckt, zum Bewegen der ersten Tür (31) zwischen ihrer Schließstellung und ihrer Offenstellung, durch ein entlang der Führungsschiene bewegbares Verschiebeelement und durch ein die erste Tür (31) mit dem Verschiebeelement verbindendes Verbindungselement.

6. Einbaukaffeevollautomat gemäß einem der Ansprüche 1 bis 5, **gekennzeichnet durch** eine Antriebseinheit (33), die dazu eingerichtet ist, bei der Betätigung eines Einschaltknopfes die erste Tür (31) aus ihrer Schließstellung in ihre Offenstellung zu bewegen.

7. Einbaukaffeevollautomat gemäß einem der Ansprüche 1 bis 6, **dadurch gekennzeichnet, dass** die erste Tür (31) ein Bedienelement (4) zur Bedienung des Einbaukaffeevollautomaten (1) enthält.

8. Einbaukaffeevollautomat gemäß Anspruch 7, **dadurch gekennzeichnet, dass** das Bedienelement (4) der ersten Tür (31) einen berührungssensitiven Flachbildschirm umfasst.

9. Einbaukaffeevollautomat gemäß einem der Ansprüche 1 bis 8, **dadurch gekennzeichnet, dass** der Serviceabschnitt (2) eine Mehrzahl von einzeln aus dem Serviceabschnitt entnehmbaren Ver- und/oder Entsorgungsbehältern (22, 23, 24, 25, 27, 28, 29) für Kaffeesatz, Wasser, Kaffeebohnen und/oder für Kaffeepulver umfasst.

10. Einbaukaffeevollautomat gemäß einem der Ansprüche 1 bis 9, **dadurch gekennzeichnet, dass** der Serviceabschnitt (2) mindestens einen Behälter (29) für Zubehör und einen Aufnahmebereich (35) für ein Milchvorratsgefäß (25) umfasst, wobei durch Entnahme oder Hinzufügen mindestens eines Behälters (29) der Aufnahmebereich (35) für ein Milchvorratsgefäß (25) veränderbar ist.

## Claims

1. Built-in fully automatic coffee machine (1) for use in the household or office with a front area which is accessible for a user, in which an output section (3) for outputting a ready-made hot drink with an output unit (32) and a service section (2) for carrying out supply and disposal functions are arranged, **characterised in that** the output unit (32) is height-adjustable and a first door (31) covers the output unit (3) on the front area in a closed position and makes the output unit (3) accessible for the outputting of a ready-made hot drink in an open position.

2. Built-in fully automatic coffee machine according to claim 1, **characterised by** a second door (21) which covers the service section (2) in a closed position and which makes the service section (2) accessible in an open position, wherein the first door (31), in its closed position, and the second door (21), in its closed position, extend in a coplanar manner over the front side of the built-in fully automatic coffee machine (1).

3. Built-in fully automatic coffee machine according to claim 2, **characterised by** a sliding door as the first door (31), which, its open position, extends essentially parallel to the second door (21), which is arranged in its closed position, such that the second door (21) is arranged between the service section (2) and the first door (31).

4. Built-in fully automatic coffee machine according to claim 2 or 3, **characterised by** a hinged door or pivot door as the second door (21).

5. Built-in fully automatic coffee machine according to one of claims 2 to 4, **characterised by** a guide rail which extends parallel to the second door (21) in the closed position thereof, for moving the first door (31) between its closed position and its open position, by way of a positioning element which is moveable along the guide rail and by way of a connecting element which connects the first door (31) to the positioning element.

6. Built-in fully automatic coffee machine according to one of claims 1 to 5, **characterised by** a drive unit (33) which is designed to move the first door (31) from its closed position to its open position when a switch-on button is actuated.

7. Built-in fully automatic coffee machine according to one of claims 1 to 6, **characterised in** the first door (31) includes an operating element (4) for operating the built-in fully automatic coffee machine (1).

8. Built-in fully automatic coffee machine according to claim 7, **characterised in that** the operating element (4) of the first door (31) comprises a touch-sensitive flat screen.

9. Built-in fully automatic coffee machine according to one of claims 1 to 8, **characterised in that** the service section (2) comprises a plurality of supply and disposal containers (22, 23, 24, 25, 27, 28, 29) for coffee grounds, water, coffee beans and/or for instant coffee which can be individually removed from the service section.

10. Built-in fully automatic coffee machine according to one of claims 1 to 9, **characterised in that** the service section (2) comprises at least one container (29) for accessories and a receiving area (35) for a milk storage container (25), wherein the receiving area (35) can be modified for a milk storage container (25) by removing or adding at least one container (29).

## Revendications

1. Machine à café intégralement automatique encastrable (1) à usage domestique ou de bureau avec une surface frontale accessible pour un utilisateur, dans laquelle sont disposées une section de distribution (3) pour la distribution d'une boisson chaude finie avec une unité de distribution (32) et une section de service (2) pour effectuer des opérations d'alimentation et/ou d'évacuation, **caractérisée en ce que** l'unité de distribution (32) est réglable en hauteur, et **en ce qu'**une première porte (31) sur la surface frontale couvre la section de distribution (3) dans une position fermée et rend la section de distribution (3) accessible pour la distribution d'une boisson chaude finie dans une position ouverte.

2. Machine à café intégralement automatique encastrable selon la revendication 1, **caractérisée par** une deuxième porte (21) qui couvre la section de service (2) dans une position fermée et qui rend la section de service (2) accessible dans une position ouverte, dans laquelle la première porte (31), dans sa position fermée, et la deuxième porte (21), dans sa position fermée, s'étendent de façon coplanaire sur le côté frontal de la machine à café intégralement automatique encastrable (1).

3. Machine à café intégralement automatique encastrable selon la revendication 2, **caractérisée par** une porte coulissante comme première porte (31), laquelle s'étend, dans sa position ouverte, de telle sorte sensiblement parallèlement à la deuxième porte (21) se trouvant dans sa position fermée, que la deuxième porte (21) est disposée entre la section de service (2) et la première porte (31).

4. Machine à café intégralement automatique encastrable selon la revendication 2 ou 3, **caractérisée par** une porte à butée ou une porte pivotante comme deuxième porte (21).

5. Machine à café intégralement automatique encastrable selon l'une des revendications 2 à 4, **caractérisée par** un rail de guidage qui s'étend parallèlement à la deuxième porte (21) dans sa position fermée, pour déplacer la première porte (31) entre sa position fermée et sa position ouverte, par le biais d'un élément de déplacement mobile le long du rail de guidage et d'un élément de liaison reliant la première porte (31) à l'élément de déplacement.

6. Machine à café intégralement automatique encastrable selon l'une des revendications 1 à 5, **caractérisée par** une unité d'entraînement (33) qui est aménagée pour déplacer la première porte (31) de sa position fermée dans sa position ouverte lors de l'actionnement d'un bouton de mise en marche.

7. Machine à café intégralement automatique encastrable selon l'une des revendications 1 à 6, **caractérisée en ce que** la première porte (31) contient un élément de commande (4) pour la commande de la machine à café intégralement automatique encastrable (1).

8. Machine à café intégralement automatique encastrable selon la revendication 7, **caractérisée en ce que** l'élément de commande (4) de la première porte (31) comprend un écran plat tactile.

9. Machine à café intégralement automatique encastrable selon l'une des revendications 1 à 8, **caractérisée en ce que** la section de service (2) comprend une pluralité de contenants d'alimentation et/ou d'évacuation (22, 23, 24, 25, 27, 28, 29) amovibles individuellement de la section de service, pour le marc de café, l'eau, les grains de café et/ou le café en poudre.

10. Machine à café intégralement automatique encastrable selon l'une des revendications 1 à 9, **caractérisée en ce que** la section de service (2) comprend au moins un contenant (29) pour des accessoires et une zone de réception (35) pour un récipient de réserve de lait (25), dans laquelle la zone de réception (35) pour un récipient de réserve de lait (25) peut être modifiée en retirant ou en ajoutant au moins un contenant (29).
